# EUROPÄISCHE PATENTSCHRIFT

(11) **EP 1 979 739 B1**
(45) Veröffentlichungstag und Bekanntmachung des Hinweises auf die Patenterteilung: **12.10.2011**
(21) Anmeldenummer: 06841108.1
(22) Anmeldetag: 21.12.2006
(51) Int. Cl.: G01N 29/44, G01N 29/26, G01N 29/04

(54) **VERFAHREN ZUR ZERSTÖRUNGSFREIEN UNTERSUCHUNG EINES WENIGSTENS EINEN AKUSTISCH ANISOTROPEN WERKSTOFFBEREICH AUFWEISENDEN PRÜFKÖRPERS**
METHOD FOR THE NON-DESTRUCTIVE EXAMINATION OF A TEST BODY HAVING AT LEAST ONE ACOUSTICALLY ANISOTROPIC MATERIAL AREA
PROCEDE D'EXAMEN NON DESTRUCTIF D'UNE EPROUVETTE DONT AU MOINS UNE REGION EST CONSTITUEE D'UN MATERIAU ACOUSTIQUEMENT ANISOTROPE

(30) Priorität: 27.01.2006 DE 102006003978
(43) Veröffentlichungstag der Anmeldung: 15.10.2008
(73) Patentinhaber: Fraunhofer-Gesellschaft zur Förderung der angewandten Forschung e.V., 80686 München (DE)
(72) Erfinder: KRÖNING, Michael, 66123 Saarbrücken (DE); BULAVINOV, Andrey, 66123 Saarbrücken (DE); REDDY, Krishna, Mohhan, c/o Andrey, 66123 Saarbrücken (DE)
(74) Vertreter: Rösler, Uwe
(86) Internationale Anmeldenummer: PCT/EP2006/012419
(87) Internationale Veröffentlichungsnummer: WO 2007/085296

(56) Entgegenhaltungen:
- EP-A2- 1 550 863
- DE-A1- 3 346 534
- GB-A- 2 279 523
- US-A- 4 106 327
- US-A- 4 328 707
- US-A- 5 465 722

## Beschreibung

### Technisches Gebiet

Die Erfindung bezieht sich auf ein Verfahren zur zerstörungsfreien Untersuchung eines wenigstens einen akustisch anisotropen Werkstoffbereich aufweisenden Prüfkörpers mittels Ultraschall.

### Stand der Technik

Zerstörungsfreie Ultraschallprüfverfahren an Prüfkörpern, die aus akustisch isotropen Vollmaterialien bestehen und zu Zwecken einer Fehlerprüfung durchgeführt werden, d.h. zum Auffinden von Rissen, Materialinhomogenitäten etc., sind hinlänglich bekannt. Voraussetzung für eine erfolgreiche Anwendung derartiger Prüfverfahren ist die Forderung nach einer möglichst gleichartigen und geradlinigen Ausbreitung von innerhalb eines jeweiligen Prüfkörpers eingekoppelten Ultraschallwellen. Um dies zu erfüllen sollte das Material, aus dem ein jeweiliger Prüfkörper besteht, über das gesamte zu überprüfende Volumen schallakustisch konstante Eigenschaften verfügen, so beispielsweise eine isotrope Dichteverteilung und isotrope elastische Eigenschaften aufweisen. In Erfüllung dieser Voraussetzung ermöglichen diese Prüfverfahren einen zuverlässigen Fehlernachweis, eine exakte räumliche Fehlerortung sowie letztlich auch mittels geeigneter Ultraschallsignalauswerteverfahren die Realisierung einer Fehlerbildgebung, anhand der Form und Größe der Fehlerstelle erkennbar sind. Repräsentativ für eine Vielzahl derartiger Ultraschallprüfsysteme sei auf die DE 33 46 534 A1 verwiesen, aus der eine Ultraschall-Bilddarstellungseinrichtung hervorgeht, die einen Gruppenstrahler-Ultraschallprüfkopf vorsieht, der ein lineares Array aus Ultraschall-Einzelwandlerelementen umfasst, die unter Fortschreiten in Scan-Richtung mit vorgegebener Scan-Frequenz einzeln oder gruppenweise aktiviert werden. Die Qualität der Fehlerbildrekonstruktion, die letztlich auch die quantitativen Aussagen bezüglich Fehlerart, Fehlerlage und Fehlergröße bestimmt, hängt von einer Vielzahl von die Ultraschalleinkopplung in den Prüfkörper, die Ultraschallwellen-Detektion, sowie die empfangene Ultraschallsignale auswertenden Rekonstruktionstechniken bestimmende Parameter ab.

Die der bisherigen Ultraschallprüftechnik zugänglichen Materialien mit Ausbreitungsgeschwindigkeiten von akustischen Wellen, die unabhängig sind von ihrer Ausbreitungsrichtung, werden als akustisch isotrope Materialien bezeichnet. Hängen jedoch die Schallgeschwindigkeiten der in Materialien eingekoppelten Ultraschallwellen von ihren jeweiligen Ausbreitungsrichtungen ab, so werden diese Materialien anisotrop bezeichnet. Ein bekanntes, natürliches anisotropes Material ist beispielsweise Holz, das mittels gängiger Ultraschallprüftechniken, wenn überhaupt nur mit Einschränkungen auf Werkstofffehler überprüft werden kann. Weitere anisotrope Werkstoffmaterialien stellen beispielsweise Faserverbund- oder geschichtete Werkstoffe dar, die bevorzugt in modernen Leichtbaukonstruktionen Anwendung finden. Grund für die unbefriedigende Prüfbarkeit derartiger anisotroper Materialien ist die strukturabhängige Art der Ausbreitung von Ultraschallwellen mit ortsabhängigen und materdichteabhänigen Schallgeschwindigkeiten. Hinzu kommt, dass anders als in isotropen Materialien, in denen lediglich zwei Arten von Schwingungsmoden von Volumenwellen, nämlich longitudinale und transversale Moden, auftreten können, in anisotropen Materialien mit drei Ausbreitungsmoden zu rechnen ist, zumal bereits zwei orthogonale Transversalmoden existieren können. In isotropen Materialien ist die Schwingung des longitudinalen Modes stets parallel, die des transversalen Modes stets senkrecht zur Ausbreitungsrichtung orientiert. In anisotropen Materialien hingegen existieren so genannte quasi-longitudinale und quasi-transversale Wellen, deren Polarisationsabweichungen sogar bei geringen Schallgeschwindigkeitsunterschieden bereits beträchtliche Effekte bei der Fehlerbildrekonstruktion verursachen können.

Aber auch die Untersuchung an Prüfkörpern, die aus unterschiedlichen akustisch isotropen Materialien bestehen, bspw. schichtförmig zusammengesetzte Prüfkörper, vermag mit den derzeitig bekannten Prüfverfahren keine exakte räumliche Fehlerortung innerhalb des Prüfkörpers zu gewährleisten, zumal die Ultraschallwellen an den Grenzflächen aneinander stoßender Materialschichten längs ihrer Ausbreitungsrichtung gebrochen werden. Bereits bei der Ultraschallprüfung in Tauchtechnik treten prinzipiell gesehen derartige, an Grenzflächen zwischen z.B. Wasser und Stahl hervorgerufene Brechungseffekte auf, wodurch die vorstehend beschriebene Fehleriokalisierung zum Teil erheblich eingeschränkt wird, zumal Brechungs- oder Beugungserscheinungen selbst an Grenzschichten zwischen zwei ansonsten isotropen Werkstoffen, eine Ortung von Fehlern nahezu unmöglich macht. Gründe dafür sind die fehlende Kenntnis des Schalllaufweges, der nicht mehr als geradlinig angenommen werden kann und damit auch die der effektiven Schallgeschwindigkeit. Auch der Fehlernachweis selbst kann unter Verwendung einer begrenzten Zahl von Einschallwinkeln mangelhaft sein, zumal der Schall bedingt durch Beugungseffekte den Fehlerort nicht erreichen kann. Aus diesem Grund werden sicherheitsrelevante Strukturwerkstoffe mit einer möglichst großen Anzahl von Einschallwinkeln geprüft, wobei die so genannte Gruppenstrahlertechnik, wie sie der vorstehend zitierten DE 33 46 534 A1 entnehmbar ist, eingesetzt.

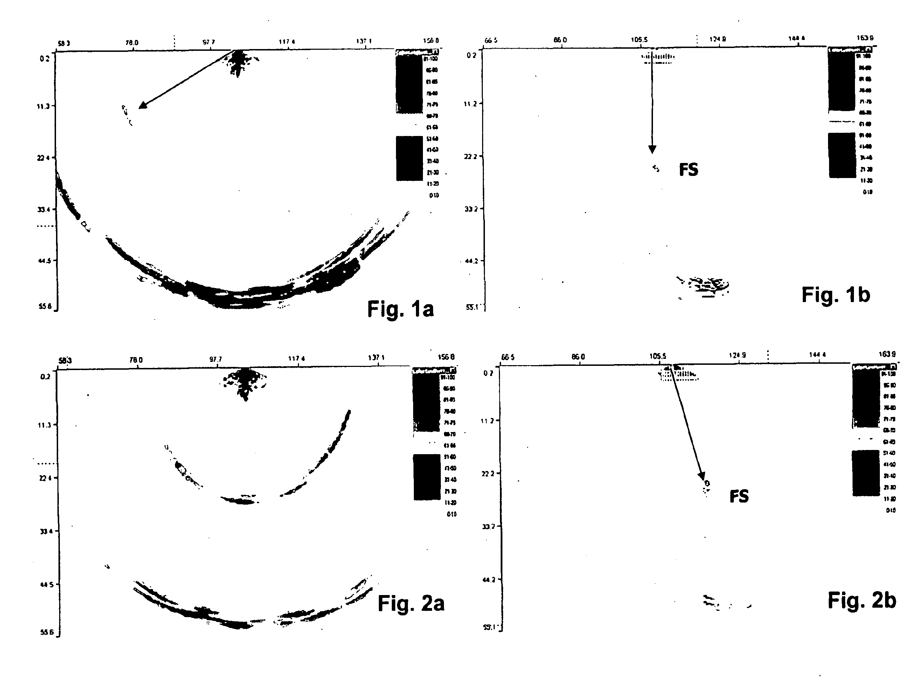

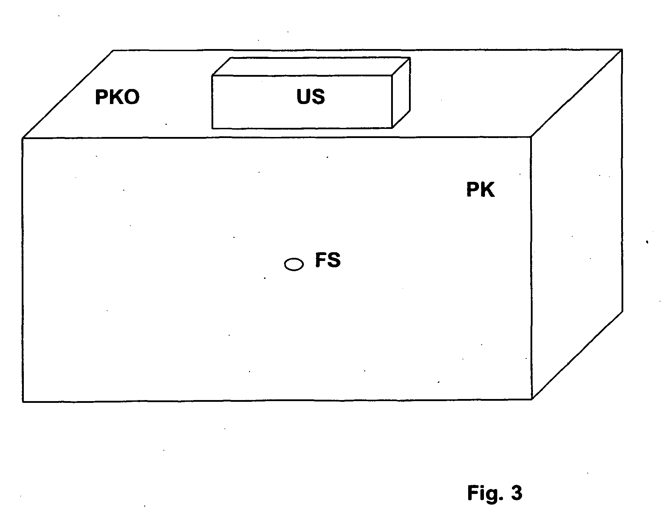

Um einen quantitativen Eindruck von dem Einfluss akustisch anisotroper Materialien auf das tatsächliche Ultraschallwellen-Ausbreitungsverhältnis zu erhalten, sei auf das in Fig. 1a dargestellte Prüfergebnis verwiesen, das mittels eines Ultraschallgruppenstrahler-Prüfkopfes US an einem aus Kohlenfaserverbundwerkstoff bestehenden Prüfkörper PK gewonnen worden ist, gemäß der in Figur 3 skizzierten Prüfsituation. Bei dem mittels des Ultraschallwellen-Gruppenstrahlerprüfkopfes US untersuchten Prüfkörpers PK handelt es sich um einen über eine ebene Prüfkörperoberfläche PKO verfügenden, aus Kohlenfaserverbundwerkstoff bestehenden Prüfkörper PK, mit einer Faserorientierung von 15° zur Prüfkörperoberfläche PKO geneigt. Die Schallgeschwindigkeit in Faserrichtung ist in etwa 3 mal größer als die in der dazu senkrechten Ausbreitungsrichtung. Ferner ist innerhalb des Prüfkörpers PK eine als Modellreflektor eingebrachte Fehlerstelle FS eingebracht, die sich unmittelbar unterhalb des auf der Prüfkörperoberfläche PKO aufliegenden Ultraschallwellen-Gruppenstrahlers US befindet.

In Fig. 1a ist ein zweidimensionales Sektorbild eines konventionell betriebenen Ultraschallgruppenstrahlers US dargestellt, d.h. sämtliche Ultraschallwandler dienen gemeinsam als Ultraschallwellensender und vermögen die innerhalb des Prüfkörpers reflektierten Ultraschallwellen zu detektieren. Anhand des in Fig. 1a dargestellten Sektorbildes ist entnehmbar, dass der Schalleinkoppelort, d.h. der Ort des Ultraschallwellen-Gruppenstrahlerprüfkopf, mittig zur Abszisse des dargestellten Koordinatensystems angeordnet ist. Die im Bereich der Schalleinkopplung auftretenden Empfangssignale rühren von Einkoppeleffekten nahe der Prüfkörperoberfläche her, stellen selbst jedoch keine Fehler innerhalb des Prüfkörpers dar. Die von der Einkoppelstelle beabstandeten halbkreisförmig angeordneten Reflexionssignale stellen Reflexionsereignisse an der Rückwand des Prüfkörpers dar, die unter nahezu allen Einschallwinkeln auftreten. Durch die durch den Prüfkörper vorgegebene Messsituation hinsichtlich der Lage der künstlich in den Prüfkörper eingebrachten Fehlerstelle, müsste im Falle eines aus einem isotropen Material bestehenden Prüfkörpers, der Reflektorort exakt unterhalb des erkennbaren Schalleintrittspunktes liegen. Im Sektorbild gemäß Fig. 1a erhält man jedoch keine Anzeige unter 0°, sondern vielmehr ein Reflektorereignis R unter Winkeln um die 45°. Dieses Prüfergebnis macht deutlich, dass das anisotrope Material des Prüfkörpers zu einer verfälschten Lageinformation einer tatsächlich im Prüfkörper vorhandenen Fehlstelle führt.

Auch eine Einkopplung der Ultraschallwellen in Richtung der Faserstruktur führt zu keinem anderen zufrieden stellenden Auswerteergebnis.

In Fig. 2a ist hierzu ein Sektorbild eines konventionell betriebenen Gruppenstrahlers mit Abstrahlrichtung längs zur Richtung der Faserstruktur dargestellt, aus dem entnommen werden kann, dass aufgrund von Beugungserscheinungen unter nahezu allen Einschallwinkeln der künstlich in den Prüfkörper eingebrachte Testreflektor zu sehen ist. Dieser stellt sich im Sektorbild gemäß Fig. 2a als Halbkreis mit kleinerem Radius dar. Es ist ersichtlich, dass der grundsätzliche Nachweis des Vorhandenseins von Fehlstellen zwar möglich ist, jedoch sind eine Lokalisierung von Fehlstellen sowie auch eine Charakterisierung hinsichtlich Größe und Art der Fehlstelle nicht möglich.

Aus US 5,465,722 A geht ein akustisches Bildgebungsverfahren zur medizinischen Untersuchung eines Gewebes auf Inhomogenitäten hervor, bei dem die Schallgeschwindigkeit im Gewebe richtungsabhängig ermittelt wird. Hierzu wird das Untersuchungsobjekt mittels eines Ultraschallwandler-Arrays an einer ersten Vielzahl von Orten mit akustischer Energie beaufschlagt, die Reflexionen an einer zweiten Vielzahl von Orten erfasst und eine sogenannte Common-Depth-Point-(CDP)-Analyse durchgeführt.

### Darstellung der Erfindung

Der Erfindung liegt die Aufgabe zugrunde, ein Verfahren zur zerstörungsfreien Untersuchung eines wenigstens einen akustisch anisotropen Werkstoffbereich aufweisenden Prüfkörper mittels Ultraschall derart anzugeben, dass eine zuverlässige Fehlerstellendetektion mit genauer Angabe über die räumlich exakte Lage, Art und Größe der innerhalb des akustisch anisotrope Werkstoffbereiches befindlichen Fehlerstelle möglich wird.

Die Lösung der der Erfindung zugrunde liegenden Aufgabe ist im Anspruch 1 angegeben. Den Erfindungsgedanken vorteilhaft weiterbildende Maßnahmen sind Gegenstand der Unteransprüche sowie der weiteren Beschreibung, insbesondere unter Bezugnahme auf die Ausführungsbeispiele zu entnehmen.

Lösungsgemäß zeichnet sich ein Verfahren zur zerstörungsfreien Untersuchung eines wenigstens einen akustisch anisotropen Werkstoffbereich aufweisenden Prüfkörpers mittels Ultraschall durch die Abfolge folgender Verfahrensschritte aus: Zunächst gilt es, die den akustisch anisotropen Werkstoffbereich beschreibenden, richtungsspezifischen Schallausbreitungseigenschaften zu ermitteln bzw. durch Rückgriff auf einen diesbezüglich bereits vorliegenden Datenbestand entsprechend bereitzustellen. Da das Schallausbreitungsverhalten innerhalb von anisotropen Werkstoffbereichen aufweisenden Prüfkörpern beispielsweise auf der Basis elastodynamischer Ansätze im Detail verstanden und beschrieben werden kann, ist es möglich, diesbezügliche detaillierte Kenntnisse vorzugsweise im Rahmen experimenteller Untersuchungen über die schallakustischen Eigenschaften nahezu beliebiger anisotroper Prüfkörper zu gewinnen und diese mittels geeigneter mathematischer Darstellungen, wie beispielsweise im Rahmen so genannter Steifigkeitsmatrizen, für weiterführende Anwendungen verfügbar zu machen. Insbesondere können aus derartigen Steifigkeitsmatrizen richtungsspezifische Schallausbreitungsgeschwindigkeiten innerhalb jeweils zu untersuchender Prüfkörper entnommen werden.

Mit Hilfe dieser, die schallakustischen Eigenschaften eines zu untersuchenden Prüfkörpers beschreibenden Kenntnisse ist es möglich, durch Einkoppeln von Ultraschallwellen in den akustisch anisotropen Werkstoffbereich des Prüfkörpers und entsprechenden Empfang von im Inneren des Prüfkörpers reflektierten Ultraschallwellen mit einer Vielzahl von Ultraschallwandlern die hierdurch detektierten Ultraschallsignale richtungsselektiv unter Zugrundelegung der richtungsspezifischen Schallausbreitungseigenschaften auszuwerten.

Bei der lösungsgemäßen richtungsselektiven Ultraschallsignalauswertung werden die Phasenbeziehungen einzelner unter unterschiedlichen Detektionsrichtungen durch entsprechende Reflexionsereignisse innerhalb des Prüfkörpers herrührende Elementarwellen erfasst. Der Empfang der Ultraschallwellen erfolgt gleichsam dem Aussenden und Einkoppeln von Ultraschallwellen in den Prüfkörper mittels eines Ultraschallwellen-Gruppenstrahlerprüfkopfes, wobei die richtungsselektive Ultraschallwellenauswertung unter Anwendung eines Signalauswerteverfahrens erfolgt, das im Weiteren erläutert wird. Unter Berücksichtigung der schallakustischen Anisotropie der innerhalb des Prüfkörpers vorhandenen Werkstoffbereiche erfolgt letztlich eine Anpassung des auszuwertenden detektierten Ultraschallwellenfeldes derart, so dass eine quasi Standardprüfsituation geschaffen wird, wie sie auch bei der Auswertung von Ultraschallsignalen durchgeführt wird, die aus akustisch isotropen Prüfkörpern entstammen.

Hierzu werden Schalllaufzeiten berechnet, die jeweils eine Ultraschallwelle benötigt, vom Ort ihrer Entstehung, der dem Einkoppelort an der Prüfkörperoberfläche entspricht und an dem ein als Sender dienendes Ultraschallwandlerelement vorgesehen ist, zu einem innerhalb eines zu rekonstruierenden Prüfkörperbereiches befindlichen Raumpunkt und zurück an den Ort eines Empfängers unter Berücksichtigung der anisotropen Werkstoffeigenschaften bzw. elastischen Materialkonstanten.

Um eine richtungsselektive Auswertung der innerhalb des Prüfkörpers reflektierten Ultraschallwellen mit dem Anspruch einer weitgehend vollständigen Volumenerfassung des Prüfkörpers durchführen zu können, wird ein mit einer Anzahl n Ultraschallwandler aufweisender Ultraschall-Gruppenstrahlerprüfkopf auf eine Oberfläche des Prüfkörpers aufgesetzt, über die sowohl Ultraschallwellen in den Prüfkörper eingekoppelt sowie auch aus dem Prüfkörper zum Nachweis entsprechender reflektierter Ultraschallwellen ausgekoppelt werden.

Die Ultraschallwandler werden vorzugsweise direkt oder mittels geeigneter Koppelmittel an der Oberfläche des Prüfkörpers appliziert. Dabei können die Ultraschallwandler ungeordnet oder geordnet in Form von eindimensionalen Arrays (längs einer Reihe), von zweidimensionalen Arrays (feldförmig) oder von dreidimensionalen Arrays (in Abhängigkeit von der dreidimensionalen Oberfläche des Prüfkörpers) an der Oberfläche des Prüfkörpers angebracht werden.

Die n Ultraschallwandler eignen sich vorteilhafterweise jeweils dazu Ultraschallwellen in den Prüfkörper einzukoppeln als auch Ultraschallwellen zu empfangen, d.h. sie werden sowohl als Ultraschallsender und Ultraschallempfänger eingesetzt bzw. angesteuert. Der Einsatz ausschließlicher Ultraschallsender und Ultraschallempfänger ist ebenfalls denkbar, dies führt jedoch bei gleicher räumlicher Auflösung der Messergebnisse zu einer größeren Anzahl von zu applizierenden Ultraschallwandlern.

Vorzugsweise eignen sich als Ultraschallwandler piezoelektrische Wandler, aber auch der Einsatz von Wandlern, die auf elektromagnetischen, optischen oder mechanischen Wirkprinzipien beruhen, ist möglich.

In vorteilhafter Weise sind die n Ultraschallwandler in einem manuell handhabbaren Ultraschallprüfkopf zusammengefasst, der eine einfache Anwendung und Applizierung an die Prüfkörperoberfläche erlaubt. Andere Applikationen der Ultraschallwandler, bspw. an gegenüberliegenden Oberflächen des Prüfkörpers ergeben sich in Abhängigkeit von Form und Größe des Prüfkörpers sowie der jeweils gestellten Untersuchungsaufgabe. Es hat sich gezeigt, dass mit dem lösungsgemäßen Verfahren eine optimale räumliche Auflösung der Messergebnisse erzielt werden kann, wenn die Zahl der vorzusehenden Ultraschallwandler gleich oder größer als 16 gewählt wird.

In einem zweiten Schritt wird aus der Gesamtzahl der n Ultraschallwandler eine erste Gruppe von Ultraschallwandlern ausgewählt, wobei die Anzahl i der der Gruppe zugehörigen Ultraschallwandler kleiner als die Gesamtzahl n aller Ultraschallwandler sein sollte.

Die Festlegung der Anzahl i der US-Sender bestimmt die pro Aktivierung der US-Sender in den Prüfkörper eingekoppelte elastische Energie, unter der Voraussetzung, dass die i US-Sender zeitgleich aktiviert werden. Je größer die Anzahl aller gleichzeitig aktiven Sender gewählt wird, umso höher ist die in den Prüfkörper eingekoppelte elastische Energie. Ferner erfolgt die Festlegung von i Ultraschallwandlern als Sender in vorteilhafter Weise derart, dass i unmittelbar benachbart angeordnete Ultraschallwandler, möglichst als flächig zusammenhängendes Ultraschallsenderarray ausgewählt werden. Unter der Voraussetzung, dass alle Sender zeitgleich senden, bestimmen die Anzahl i der US-Sender und die konkrete Zusammensetzung der Sendergruppe, insbesondere deren Anordnung auf der Prüfkörperoberfläche, zudem die Gesamtabstrahlcharakteristik (Apertur) der Sendergruppe und darüber hinaus die Empfindlichkeit und das Auflösungsvermögen der Messungen.

Im Weiteren werden alle i der ersten Gruppe angehörigen Ultraschallwandler zum Aussenden von Ultraschallwellen aktiviert, die in den Prüfkörper einkoppeln, wobei das Aktivieren der i einer Gruppe zugehörigen Ultraschallwandler moduliert durchgeführt wird, d.h. jeder einzelne Ultraschallwandler wird mit einer unterscheidbaren Modulation aktiviert, so dass die in den Prüfkörper eingekoppelten Ultraschallwellen senderspezifisch detektiert werden. An Störstellen innerhalb des Prüfkörpers oder an den jeweiligen Einkoppelbereichen gegenüberliegenden Prüfkörperoberflächen werden die Ultraschallwellen reflektiert und gelangen wieder zurück an den Oberflächenbereich der n auf der Prüfkörperoberfläche applizierten Ultraschallwandler, von denen alle n oder nur ein begrenzter Teil m die Ultraschallwellen empfängt, wobei die Anzahl m stets größer sein sollte als die Anzahl i der am Ultraschallaussenden beteiligten Ultraschallwandler.

Nach jedem einzelnen Messtakt werden die von den m als US-Empfänger dienenden Ultraschallwandler oder maximal von allen n US-Wandlern empfangenen Ultraschallwellen in Ultraschallsignale umgewandelt und abgespeichert, d.h. einer entsprechenden Speichereinheit zugeführt und dort gespeichert.

Alternativ zu einer zeitgleichen Aktivierung von i ausgewählten, einer Gruppe zugehörigen und als US-Sender dienenden Ultraschallwandler, ist es denkbar die US-Sender phasenverschoben, d.h. teilweise oder vollständig zeitversetzt anzuregen. Dadurch kann, wie vorstehend i.V.m. dem Phased Array-Prinzip beschrieben, die Einschallrichtung bzw. die Fokussierung der elastischen Energie der Ultraschallwellen auf einen bestimmten Volumenbereich innerhalb des Prüfkörpers vorgenommen werden. Auch lässt sich damit u. a. die Apertur der i US-Sender optimiert auf bestimmte Einschallrichtungen oder Fokussierungen einstellen.

Nach Durchführung eines oder mehrerer Messtakte erfolgt eine geänderte Auswahl von Ultraschallwellen erzeugenden US-Sender. - Aus Gründen einer besseren Messempfindlichkeit bietet es sich an mehrere Messtakte mit einer gleich bleibenden US-Senderkonstellation durchzuführen, um im Wege statistischer Signalauswertung ein verbessertes Signal-/Rauschverhältnis zu erhalten. Es gilt erneut eine Gruppe von Ultraschallwandlern zu bilden, deren Anzahl i zwar identisch, jedoch deren Zusammensetzung sich von jener zuvor gewählten Zusammensetzung unterscheiden sollte, zumindest in einem Ultraschallwandler.

Auf diese Weise gelingt es den Prüfkörper aus unterschiedlichen Einkoppelbereichen mit Ultraschallwellen zu beschallen. Gleichsam dem ersten Messtakt oder dem ersten Messzyklus, der sich aus mehreren ersten Messtakten zusammensetzt, werden auch mit der neuen US-Senderkonstellation die reflektierten Ultraschallwellen mit allen n Ultraschallwandler oder einem Teil m der Ultraschallwandler empfangen und in Ultraschallsignale umgewandelt, die letztlich ebenfalls abgespeichert werden. Alle n oder m für den Empfang von Ultraschallwellen dienenden Ultraschallwandler verbleiben trotz veränderter US-Senderkonstellationen unverändert, um eine möglichst einfache Messsignalauswertung nachträglich zu ermöglichen, wie dies im Weiteren noch zu entnehmen ist.

Der vorstehend beschriebenen Verfahrensschritte der wiederholten Aktivierung einer Gruppe von Ultraschallwandlern mit einer geänderten Zusammensetzung an Ultraschallwandlern sowie des Empfangs sowie Abspeicherung der gewonnenen Messsignale werden vorgebbar oft wiederholt, um auf diese Weise das Durchschallungs- bzw. Reflexionsvermögen des Prüfkörpers aus einer Vielzahl, vorzugsweise aus allen möglichen Einschallungspositionen zu ermitteln.

Bei der Aktivierung einer aus i Ultraschallwandler bestehenden Gruppe können maximal alle i Permutationen aus n vorhandenen Ultraschallwandler durchgeführt werden.

Als Resultat der Durchführung der vorstehenden Verfahrensschritte wird eine Vielzahl der pro Messtakt bzw. Messzyklus abgespeicherten m Messsignale gewonnen, die es im Weiteren unter Maßgabe einer zielführenden Prüfkörperuntersuchung zu analysieren gilt. Ein besonderer Aspekt kommt der Möglichkeit der nachträglichen Auswertung der abgespeicherten Messsignale zu nach Durchführung der eigentlichen Vermessung des Prüfkörpers. Die Auswertung der Ultraschallsignale erfolgt sozusagen offline mit einem Rekonstruktionsalgorithmus, der unter Maßgabe eines virtuell vorgebbaren Einschallwinkels und/oder einer virtuellen Fokussierungen der eingekoppeltem Ultraschallwellen in den Prüfkörper ausgewählt und auf die abgespeicherten Ultraschallsignale angewendet wird. Mit Hilfe derartiger Rekonstruktionsalgorithmen können aus den gespeicherten Ultraschallsignalen synthetisch dreidimensionale Abbilder der Durchschallungs- bzw. Reflexionseigenschaften des Prüfkörpers errechnet werden, ohne, dass es zusätzlicher weitere Ultraschallmessungen bedarf. Dieses Rekonstruktionsprinzip basiert auf der Anwendung der Synthetic Apertur Focussing Technique (SAFT), die darin besteht, dass alle empfangenen Ultraschallsignale möglichst auf eine gemeinsame Zeitachse projiziert werden. Dabei werden alle von einem bestimmten Reflektor bzw. von einer bestimmten Fehlerstelle reflektierten Ultraschallsignale unter Berücksichtigung der anisotropen Schallausbreitungseigenschaften des Prüfkörpermaterials und einer damit verbundenen Phasenanpassung phasengleich addiert werden. Eine nachträgliche Rekonstruktion beliebiger Einschallwinkel ergibt sich durch eine phasenversetzte Addition der Empfangssignale von verschiedenen Ultraschallempfängern. Durch die off-line Auswertung ist man in der Lage nahezu jeden Einschallwinkel synthetisch zu rekonstruieren und damit einen Ultraschallschwenk (,Sweep') durch den Datensatz durchzuführen.

Mit Hilfe der vorstehend beschriebenen Ultraschallprüftechnik unter Verwendung eines so genannten getakteten Gruppenstrahlersystems und einer lösungsgemäß vorgeschlagenen Signalauswertung unter Berücksichtigung der materialeigenen, schallakustisch anisotropen Werkstoffeigenschaften des Prüfkörpers können eine Reihe von Vorteilen im Prinzip der so genannten inversen Phasenanpassung erzielt werden:
So ermöglicht die getaktete Gruppenstrahlertechnik mit inverser Phasenanpassung einen Fehlernachweis sowie eine Fehlerbildrekonstruktion für anisotrope Werkstoffe mit einer Qualität und Zuverlässigkeit, die jener Ultraschalltechnikuntersuchung in herkömmlicher Weise an isotropen Werkstoffen entspricht.

Je nach Wahl der Anzahl der sendenden Ultraschallwandler, des Abstandes sowie der Anordnung des Sensorsystems können Optimierungen in Abhängigkeit von den Anisotropie-Parametem des zu untersuchenden Prüfkörpers vorgenommen werden.

Auch eine Ultraschallprüfung in Tauchtechnik ist mit Hilfe des lösungsgemäßen Verfahrens zur Untersuchung heterogener bzw. schallakustisch anisotroper Materialien möglich. Durch die schallakustische Ankopplung über eine Flüssigkeitsschicht zwischen Gruppenstrahlerkopf und zu untersuchender Prüfkörperoberfläche sind dem Verfahren auch Prüfkörpergeometrien mit kompliziert gestalteten Oberflächengeometrien zugänglich. Diese Möglichkeit erleichtert die Herstellung und den Einsatz des Prüfsystems zu geringen Kosten und geringem sensortechnischen Aufwand.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: Sektorbilddarstellungen durch einen anisotropen Prüfkörper,
- Fig. 2 a, b: Sektorbilddarstellungen durch einen anisotropen Prüfkörper und
- Fig3: Schematische Darstellung der experimentellen Prüfsituation.

### Wege zur Ausführung der Erfindung, gewerbliche Verwendbarkeit

Wie bereits vorstehend erwähnt, kann aus dem Sektorbild gemäß Fig. 1a keine Lokalisierung einer Fehlstelle innerhalb eines anisotropen Prüfkörpers vorgenommen werden, lediglich das Vorhandensein einer Fehlstelle ist durch das Rückstreusignal FS erkennbar. Wird hingegen das lösungsgemäße Verfahren wie eingangs beschrieben eingesetzt und die aus sämtlichen Volumenbereichen detektierten Ultraschallwellen unter Maßgabe ihrer richtungsspezifischen Schallwellen-Ausbreitungsgeschwindigkeiten ausgewertet, so kann, selbst bei anisotroper Materialbeschaffenheit des zu untersuchenden Prüfkörpers PK, Lage, Form und Größe einer Fehlstelle FS exakt zur Darstellung gebracht werden. In Fig. 1b zeigt sich unmittelbar senkrecht unter dem Ort der Schallwelleneinkopplung die räumliche Lage der Fehlstelle FS, wie es auch in der in Figur 3 dargestellten Prüfsituation der Fall ist.

Auch im Falle einer Einstellung von Ultraschallwellen in Richtung der Faserstruktur ist es mit Hilfe des lösungsgemäßen Verfahrens möglich, die exakte Lage der Fehlstelle FS gemäß Sektorbilddarstellung in Fig. 2b zu erfassen und zur Darstellung zu bringen, ganz im Gegensatz zur Anwendung bisher bekannter Ultraschallprüftechniken, die zu einer Sektorbilddarstellung gemäß Fig. 2a führen, die in der Beschreibungseinleitung ausführlich erläutert worden ist.

### Bezugszeichenliste

- FS: Fehlerstelle
- US: Ultraschall-Gruppenstrahlerprüfkopf
- PK: Prüfkörper
- PKO: Prüfkörperoberfläche

## Patentansprüche

1. Verfahren zur zerstörungsfreien Untersuchung eines wenigstens einen akustisch anisotropen Werkstoffbereich aufweisenden Prüfkörpers mittels Ultraschall, mit den folgenden Verfahrensschritten.
- Ermitteln oder Bereitstellen von den akustisch anisotropen Werkstoffbereich beschreibenden, richtungsspezifischen Schallausbreitungseigenschaften, durch Berechnen wenigstens einer den akustisch anisotropen Werkstoffbereich beschreibenden Steifigkeitsmatrix oder mittels einer experimentellen richtungsabhängigen Schallgeschwindigkeitsmessung,
- Einkoppeln von Ultraschallwellen in den akustisch anisotropen Werkstoffbereich des Prüfkörpers und Empfangen von im Inneren des Prüfkörpers reflektierten Ultraschallwellen mit einer Vielzahl von Ultraschallwandlern, in der nachfolgenden Weise:
a) Vorsehen von n Ultraschallwandlern an einer Oberfläche des Prüfkörpers,
b) Auswählen und Aktivieren einer ersten Gruppe mit i Ultraschallwandlern aus den n Ultraschallwandlern zum Aussenden von Ultraschallwellen in den Prüfkörper, mit i < n, wobei das Aktivieren der i einer Gruppe zugehörigen Ultraschallwandler moduliert durchgeführt wird, d.h. jeder einzelne Ultraschallwandler wird mit einer unterscheidbaren Modulation aktiviert, so dass die in den Prüfkörper eingekoppelten Ultraschallwellen Senderspezifisch detektiert werden,
c) Empfangen der im Inneren des Prüfkörpers reflektierten Ultraschallwellen mit m Ultraschallwandlern, mit i < m ≤ n, und Generieren von m Ultraschallsignalen,
d) Abspeichern der m Ultraschallsignale,
e) Auswählen und Aktivieren einer anderen Gruppe mit i Ultraschallwandlern, die sich wenigstens durch einen Ultraschallwandler von der ersten Gruppe unterscheidet zum Aussenden von Ultraschallwellen und Durchführen der Verfahrensschritte c) und d),
f) Wiederholtes Ausführen des Verfahrensschrittes e) mit jeweils der Auswahl einer weiteren Gruppe von i Ultraschallwandlern unter der Maßgabe, dass sich die weitere Gruppe mit i Ultraschallwandlern von einer bereits ausgewählten Gruppe mit i Ultraschallwandlern unterscheidet, und
- Auswerten von mittels der Vielzahl von Ultraschallwandlern generierten Ultraschallsignale derart, dass die Auswertung richtungsselektiv unter Zugrundelegung der richtungsspezifischen Schallausbreitungseigenschaften derart erfolgt, dass das Auswerten der Ultraschallsignale mit einem Rekonstruktionsalgorithmus nach Durchführung der Durchschallung des Prüfkörpers mit Ultraschall, durchgeführt wird, und dass der Rekonstruktionsalgorithmus unter Massgabe eines virtuell vorgebbaren Einschallwinkels und/oder Schnittes und/oder 3D-Bereiches mit einer virtuellen Fokussierung der eingekoppelten Ultraschallwellen in den Prüfkörper ausgewählt und auf die abgespeicherten Ultraschallsignale angewendet wird.

2. Verfahren nach Anspruch 1,
**dadurch gekennzeichnet, dass** das Vorsehen von n Ultraschallwandlern in einer ein-, zwei- oder dreidimensionalen arrayförmigen Anordnung erfolgt.

3. Verfahren nach Anspruch 1 oder 2,
**dadurch gekennzeichnet, dass** das Aktivieren aller i einer Gruppe zugehörigen Ultraschallwandler zeitgleich, d.h. ohne Phasenverschiebung erfolgt.

4. Verfahren nach einem der Ansprüche 1 bis 3,
**dadurch gekennzeichnet, dass** das Auswählen der i einer Gruppe zugehörigen Ultraschallwandler derart durchgeführt wird, dass unmittelbar benachbarte Ultraschallwandler gemäß eines Linear- oder Flächenarrays ausgewählt werden.

5. Verfahren nach einem der Ansprüche 1 bis 4,
**dadurch gekennzeichnet, dass** n ≥ 16 gewählt wird.

6. Verfahren nach einem der Ansprüche 1 bis 5,
**dadurch gekennzeichnet, dass** Ultraschallwandler eingesetzt werden, die auf einem elektromagnetischen, optischen und/oder mechanischen Wirkprinzip beruhen, insbesondere auf dem piezoelektrischen Wandlerprinzip beruhen.

7. Verfahren nach einem der Ansprüche 1 bis 6,
**dadurch gekennzeichnet, dass** die Auswertung der Ultraschallsignale im Wege einer Phasenanpassung der durch die m Ultraschallwandler empfangenen Ultraschallwellen derart durchgeführt wird, dass Ultraschall-Laufzeiten von jedem als Sender dienenden Ultraschallwandler zu jedem Raumpunkt eines zu rekonstruierenden Prüfkörperbereiches und zurück zu jedem als Empfänger dienenden Ultraschallwandlers unter Berücksichtigung der anisotropen Werkstoffeigenschaften oder elastischen Materialkonstanten rechnerisch ermittelt werden.

8. Verfahren nach einem der Ansprüche 1 bis 7,
**dadurch gekennzeichnet, dass** das Generieren und Abspeichern jeweils der m Ultraschallsignale im Wege einer Analog-Digital-Wandlung erfolgt, bei der die analogen Ultraschallsignale der m Ultraschallwandler in digitale Signale umgewandelt werden und in serieller Form abgespeichert werden.

9. Verfahren nach einem der Ansprüche 1 bis 8,
**dadurch gekennzeichnet, dass** das Empfangen der im Inneren des Prüfkörpers reflektierten Ultraschallwellen mit sämtlichen an der Oberfläche des Prüfkörpers vorgesehenen Ultraschallwandler durchgeführt wird, d.h. m = n.

10. Verfahren nach einem der Ansprüche 1 bis 9,
**dadurch gekennzeichnet, dass** der Prüfkörper vollständig aus einem akustisch anisotropen Werkstoff besteht.

## Claims

1. Method for the non-destructive investigation of a test specimen having at least one acoustically anisotropic material region by means of ultrasound, with the following method steps,
- detection or provision of direction-specific sound propagation properties describing the acoustically anisotropic material region, by means of the calculation of at least one stiffness matrix describing the acoustically anisotropic material region or by means of an experimental direction-dependent speed of sound measurement,
- coupling ultrasound waves into the acoustically anisotropic material region of the test specimen and receiving ultrasound waves reflected from in the interior of the test specimen with a multiplicity of ultrasound transducers, in the following manner:
a) providing n ultrasound transducers on a surface of the test specimen,
b) selecting and activating a first group with i ultrasound transducers from the n ultrasound transducers for emitting ultrasound waves into the test specimen, where i < n, wherein the activation of the i ultrasound transducers belonging to a group is carried out in a modulated manner, i.e. each individual ultrasound transducer is activated with a distinguishable modulation, so that the ultrasound waves coupled into the test specimen are detected transmitter specifically,
c) receiving the ultrasound waves reflected in the interior of the test specimen with m ultrasound transducers, where i < m ≤ n, and generating m ultrasound signals,
d) saving the m ultrasound signals,
e) selecting and activating another group with i ultrasound transducers which differs from the first group at least by one ultrasound transducer, for emitting ultrasound waves and carrying out the method steps c) and d),
f) repeated execution of method step e) with the selection of a further group of i ultrasound transducers in each case, with the proviso that the further group with i ultrasound transducers differs from an already selected group with i ultrasound transducers, and
- evaluating ultrasound signals generated by means of the multiplicity of ultrasound transducers in such a manner that the evaluation takes place in a direction-selective manner on the basis of the direction-specific sound propagation properties in such a manner that the evaluation of the ultrasound signals is carried out using a reconstruction algorithm following the carrying out of the ultrasonic testing of the test specimen with ultrasound, and that the reconstruction algorithm is selected subject to a virtually predeterminable intromission angle and/or section and/or 3D region with a virtual focussing of the coupled ultrasound waves into test specimen and is applied to the saved ultrasound signals.

2. Method according to claim 1,
**characterised in that** the provision of n ultrasound transducers takes place in a one-, two- or three-dimensional array-like arrangement.

3. Method according to claim 1 or 2,
**characterised in that** the activation of all i ultrasound transducers belonging to a group takes place simultaneously, i.e. without phase shift.

4. Method according to any one of claims 1 to 3,
**characterised in that** the selection of the i ultrasound transducers belonging to a group is carried out in such a manner that directly adjacent ultrasound transducers are selected in accordance with a linear or area array.

5. Method according to any one of claims 1 to 4,
**characterised in that** n ≥ 16 is chosen.

6. Method according to any one of claims 1 to 5,
**characterised in that** ultrasound transducers are used which are based on an electromagnetic, optical and/or mechanical operating principle, particularly on the piezoelectric transducer principle.

7. Method according to any one of claims 1 to 6, **characterised in that** the evaluation of the ultrasound signals is carried out in the course of phase matching of the ultrasound waves received by the m ultrasound transducers in such a manner that ultrasound transit times from each ultrasound transducer used as transmitter to each point in space of a test specimen region to be reconstructed and back to each ultrasound transducer used as receiver, are computationally determined, taking account of the anisotropic material properties or elastic material constants.

8. Method according to any one of claims 1 to 7,
**characterised in that** the generation and saving of the m ultrasound signals in each case takes place in the course of an analogue/digital conversion, in which the analogue ultrasound signals of the m ultrasound transducers are converted to digital signals and saved in serial form.

9. Method according to any one of claims 1 to 8,
**characterised in that** the receiving of the ultrasound waves reflected in the interior of the test specimen is carried out with all of the ultrasound transducers provided on the surface of the test specimen, i.e. m = n.

10. Method according to any one of claims 1 to 9,
**characterised in that** the test specimen consists completely of an acoustically anisotropic material.

## Revendications

1. Procédé pour l'examen sans destruction d'une éprouvette présentant au moins une zone de matériau anisotrope au plan acoustique par ultrasons, présentant les étapes de procédé suivantes :
- détermination ou mise à disposition de propriétés de propagation du son décrivant la zone de matériau anisotrope au plan acoustique et spécifiques à la direction, par le calcul d'au moins une matrice de rigidité décrivant la zone de matériau anisotrope au plan acoustique ou au moyen d'une mesure de vitesse du son expérimentale et dépendante de la direction,
- injection d'ultrasons dans la zone de matériau anisotrope au plan acoustique de l'éprouvette et réception d'ondes ultrasonores réfléchies à l'intérieur de l'éprouvette comprenant une pluralité de transducteurs d'ultrasons, de la façon suivante :
a) prévision de n transducteurs d'ultrasons sur une surface de l'éprouvette,
b) sélection et activation d'un premier groupe avec i transducteurs d'ultrasons provenant des n transducteurs d'ultrasons pour l'émission d'ondes ultrasonores dans l'éprouvette, avec i < n, l'activation des i transducteurs d'ultrasons spécifiques à un groupe étant effectuée de façon modulée, ce qui veut dire que chaque transducteur d'ultrasons individuel est activé avec une modulation différenciable, de sorte que les ondes ultrasonores injectées dans l'éprouvette sont détectées de façon spécifique à l'émetteur,
c) réception des ondes ultrasonores réfléchies à l'intérieur de l'éprouvette avec m transducteurs d'ultrasons, avec i < m ≤ n, et génération de m signaux ultrasonores,
d) conservation en mémoire des m signaux ultrasonores,
e) sélection et activation d'un autre groupe avec i transducteurs d'ultrasons, qui se différencie au moins par un transducteur d'ultrasons du premier groupe pour l'émission d'ondes ultrasonores et mise en oeuvre des étapes de procédé c) et d),
f) mise en oeuvre répétée de l'étape de procédé e) comprenant à chaque fois la sélection d'un autre groupe de i transducteurs d'ultrasons à la condition que l'autre groupe avec i transducteurs d'ultrasons se différencie d'un groupe déjà sélectionné avec i transducteurs d'ultrasons, et
- analyse de signaux ultrasonores générés au moyen de la pluralité de transducteurs d'ultrasons, de telle sorte que l'analyse s'effectue de façon sélective en direction sur la base des propriétés de propagation du son spécifiques à la direction, de telle sorte que l'analyse des signaux ultrasonores est effectuée avec un algorithme de reconstitution après la réalisation de l'examen de l'éprouvette aux ultrasons, et en ce que l'algorithme de reconstitution est sélectionné avec la condition préalable d'un angle d'incidence et/ou de la coupe et/ou de la zone en 3D, prédéfinissable virtuellement, avec une focalisation virtuelle des ondes ultrasonores injectées dans l'éprouvette et est appliqué aux signaux ultrasonores mis en mémoire.

2. Procédé selon la revendication 1,
**caractérisé en ce que** la prévision de n transducteurs d'ultrasons s'effectue dans un agencement en forme de réseau à une dimension, deux dimensions ou trois dimensions.

3. Procédé selon la revendication 1 ou 2,
**caractérisé en ce que** l'activation de tous les i transducteurs d'ultrasons spécifiques à un groupe s'effectue simultanément, c'est-à-dire sans décalage de phases.

4. Procédé selon l'une quelconque des revendications 1 à 3,
**caractérisé en ce que** la sélection des i transducteurs d'ultrasons spécifiques à un groupe est effectuée de telle sorte que des transducteurs d'ultrasons directement voisins sont sélectionnés selon un réseau linéaire ou un réseau de surface.

5. Procédé selon l'une quelconque des revendications 1 à 4,
**caractérisé en ce que** n est choisi ≥ 16.

6. Procédé selon l'une quelconque des revendications 1 à 5,
**caractérisé en ce qu'**on utilise des transducteurs d'ultrasons qui reposent sur un principe de fonctionnement électromagnétique, optique et/ou mécanique, en particulier reposent sur le principe de transducteur piézoélectrique.

7. Procédé selon l'une quelconque des revendications 1 à 6,
**caractérisé en ce que** l'analyse des signaux ultrasonores est effectuée par le biais d'une adaptation de phase des ondes ultrasonores reçues par les m transducteurs d'ultrasons, de telle sorte que les temps de parcours des ultrasons de tout transducteur d'ultrasons servant d'émetteur à tout point dans l'espace d'une zone d'éprouvette à reconstituer et retour à tout transducteur d'ultrasons servant de récepteur sont déterminés de façon mathématique en tenant compte des propriétés de matériau anisotropes ou de constantes de matériau élastiques.

8. Procédé selon l'une quelconque des revendications 1 à 7,
**caractérisé en ce que** la génération et la mise en mémoire respectivement des m signaux ultrasonores s'effectuent par le biais d'une conversion analogique-numérique, lors de laquelle les signaux ultrasonores analogiques des m transducteurs d'ultrasons sont transformés en signaux numériques et sont mis en mémoire sous forme série.

9. Procédé selon l'une quelconque des revendications 1 à 8,
**caractérisé en ce que** la réception des ondes ultrasonores réfléchies à l'intérieur de l'éprouvette est effectuée avec l'ensemble des transducteurs d'ultrasons prévus sur la surface de l'éprouvette, ce qui veut dire m = n.

10. Procédé selon l'une quelconque des revendications 1 à 9,
**caractérisé en ce que** l'éprouvette est complètement à base d'un matériau anisotrope au plan acoustique.
